# EUROPEAN PATENT APPLICATION

(11) **EP 4 491 002 A1**
(43) Date of publication of application: **15.01.2025**
(21) Application number: 24187767.9
(22) Date of filing: 10.07.2024
(51) Int. Cl.: A01D 34/00, G05D 105/15

(54) **ROBOT MOWER AND CONTROL METHOD THEREFOR**

(30) Priority: 14.07.2023 CN 202310865020
(71) Applicant: Suzhou Cleva Precision Machinery & Technology Co., Ltd., Suzhou, Jiangsu 215000 (CN)
(72) Inventor: Zhu, Shaoming, Suzhou, 215000 (CN); Yuan, Lichao, Suzhou, 215000 (CN)
(74) Representative: Murgitroyd & Company

(57) **Abstract**

The present invention discloses a robot mower and a control method therefor. The method comprises: controlling the robot mower to turn when detecting a boundary of a lawn or an obstacle; when controlling the robot mower to turn, obtaining a target position, the target position being determined according to an unmowed region having largest area; calculating a turning angle of the robot mower; and controlling the robot mower to turn according to the turning angle. With the goal of the unmowed region having largest area, the robot mower moves in a most unmowed possibility, so that a plurality of diverging unmowed regions quickly converge to a mowed state, and the speed of mowing the entire lawn is faster.

## Description

### TECHNICAL FIELD

The present invention relates to a robot mower, in particular to a control method for a robot mower.

### BACKGROUND

The work efficiency of randomly moving robot mowers is low, resulting in relatively long mowing durations. Furthermore, even after long-time operation, there may be regions that remain unmowed or the grass may not be mowed to a sufficiently low height. Therefore, these robot mowers cannot meet user's requirements well, which reduces user experience.

### SUMMARY

In view of the above problems, the objective of the present invention is to provide a control method for a robot mower for more efficient operation.

To achieve the above objective, the present invention provides a control method for a robot mower, comprising:
controlling the robot mower to work in a lawn, and controlling the robot mower to turn when detecting a boundary of the lawn or an obstacle;
when controlling the robot mower to turn, obtaining a target position, the target position being determined according to an unmowed region having largest area, wherein there is a plurality of unmowed regions except regions where the robot mower has mowed grass in the lawn;
calculating a turning angle of the robot mower according to a current position and current orientation of the robot mower and the target position;
controlling the robot mower to turn according to the turning angle; and
controlling the robot mower to move forward.

As a further improvement of the present invention, the step of, when controlling the robot mower to turn, obtaining a target position, the target position being determined according to an unmowed region having largest area, comprises:
when controlling the robot mower to turn, determining whether a condition for obtaining the unmowed region having largest area is satisfied; and
when the condition is satisfied, obtaining the unmowed region having largest area, and obtaining any position within the unmowed region having largest area, or calculating an average value of coordinate points within the unmowed region having largest area, as the target position.

As a further improvement of the present invention, the unmowed region having largest area is obtained by the following steps:
synchronously recording a movement path of the robot mower on the map when the robot mower moves;
obtaining all unmowed regions of the map, wherein the unmowed regions are reigons within the lawn of the map that are not covered by the movement path of the robot mower; and
calculating a region having largest area among all the unmowed regions, as the unmowed region having largest area.

As a further improvement of the present invention, the map comprises a plurality of grids, the grids through which the movement path of the robot mower has passed are marked as covered grids, and the grids through which the movement path of the robot mower has not passed are marked as uncovered grids.

As a further improvement of the present invention, the step of calculating a region having largest area among the unmowed regions comprises: taking an region with the largest number of adjacent uncovered grids as the region having largest area among the unmowed regions.

As a further improvement of the present invention, the step of determining whether a condition for obtaining the unmowed region having largest area is satisfied comprises:
determining that the movement state of the robot mower satisfies the condition if the mowing time of the robot mower reaches a first check threshold;
   or
obtaining visual data collected by the robot mower;
identifying the visual data and determining height data of grass in the lawn in the visual data; and
comparing the height data with a height threshold, and determining that the movement state of the robot mower satisfies the condition if the duration of the height data less than the height threshold reaches a second check threshold;
   or
obtaining working current of the robot mower; and
comparing the working current with a current threshold, and determining that the movement state of the robot mower satisfies the condition if the duration of the working current less than the current threshold reaches a third check threshold.

As a further improvement of the present invention, the step of calculating a turning angle of the robot mower according to a current position and current orientation of the robot mower and the target position comprises:
calculating an angle between a direction of a line connecting the current position with the target position and the current orientation, wherein the calculated angle is the turning angle.

As a further improvement of the present invention, the step of calculating a turning angle of the robot mower according to a current position and current orientation of the robot mower and the target position comprises:
calculating an angle value between a direction of a line connecting the current position with the target position and the current orientation;
determining magnitudes of the angle value and a minimum angle threshold; and
setting a custom angle as the turning angle if the angle value is less than the minimum angle threshold, wherein the custom angle is greater than the minimum angle threshold; or
setting the angle value as the turning angle if the angle value is not less than the minimum angle threshold.

As a further improvement of the present invention, the custom angle is a random angle greater than the minimum angle threshold, or a preset angle.

To achieve the above objective, the present invention provides a robot mower, comprising:
a storage module for storing a computer program; and
a processing module capable of implementing the steps of the aforementioned control method when executing the computer program.

Compared with existing technologies, the present invention has the following beneficial effects: the control method for a robot mower controls the robot mower to turn and move towards a direction of an unmowed region having largest area when detecting the boundary of the lawn or an obstacle, enabling the robot mower to move in a manner that maximizes the chances of encountering unmowed grass. This results in a swift convergence of multiple dispersed unmowed regions into fully mowed region, accelerating the overall speed of mowing the entire lawn and improving the work efficiency.

### BRIEF DESCRIPTION OF THE DRAWINGS

FIG. 1 is a flowchart of a control method for a robot mower according to an embodiment of the present invention;
FIG. 2 is a flowchart of an embodiment of step S30 in FIG. 1;
FIG. 3 is a flowchart of an embodiment of step S40 in FIG. 1;
FIG. 4 is a schematic diagram illustrating that the robot mower mows grass in an unmowed region having largest area for a first time according to an embodiment of the present invention;
FIG. 5 is a schematic diagram illustrating that the robot mower mows grass in an unmowed region having largest area for a second time according to an embodiment of the present invention;
FIG. 6 is a schematic diagram illustrating that the robot mower mows grass in an unmowed region having largest area for a third time according to an embodiment of the present invention;
FIG. 7 is a schematic diagram illustrating that the robot mower mows grass in an unmowed region having largest area for a fourth time according to an embodiment of the present invention;
FIG. 8 is a schematic diagram illustrating that the robot mower mows grass in an unmowed region having largest area according to another embodiment of the present invention; and
FIG. 9 is a schematic diagram of modules of a robot mower according to an embodiment of the present invention.

### DETAILED DESCRIPTION OF THE EMBODIMENTS

The present invention will be described in detail below in conjunction with specific implementations shown in the accompanying drawings. However, these implementations do not limit the present invention. Structures, methods, or functional transformations made by those of ordinary skill in the art based on these implementations are all comprised within the protection scope of the present invention.

An embodiment of the present invention provides a control method for a robot mower with low positioning precision to operate more efficiently.

In one embodiment, a robot mower is provided. The robot mower may mow grass on a lawn. The robot mower may comprise a travel module, a mowing module, and a positioning module, where the travel module is configured to drive the robot mower to move, the mowing module is configured to mow higher grass into lower grass, and the positioning module is configured to determine a position of the robot mower.

The positioning module in this embodiment can achieve low-precision navigation and positioning, with a precision of approximately 3-10 meters. On the one hand, device costs are reduced, and on the other hand, user's requirements are met. Because there is some error in the precision of the positioning module with low precision compared to centimeter-level positioning precision, the determined position may not match the actual position. In addition, if the mowed region, unmowed region, current position, and current orientation below are determined by the positioning module, their measured values may deviate from actual values. For example, if the unmowed region is determined by the positioning module, its boundary may be inconsistent with an actual unmowed boundary, and the current position may be inconsistent with an actual position. Specific working processes of these modules will be explained below.

In one embodiment, a control method for a robot mower is provided. The control method is mainly used to control the robot mower to mow missed regions, that is, the robot mower does not operate based on the method at the beginning, but operates by mowing the remaining lawn after reaching some conditions.

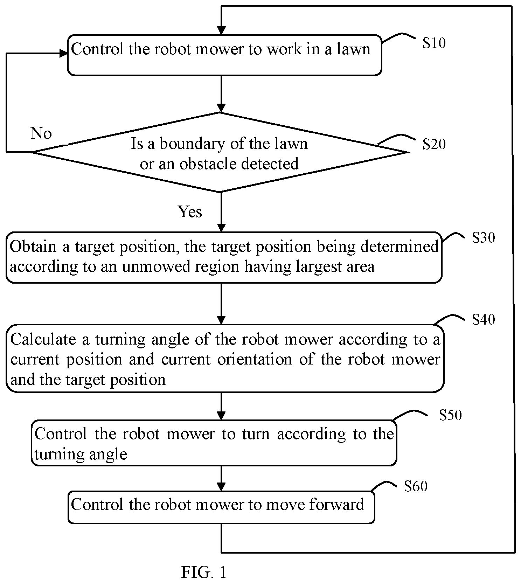

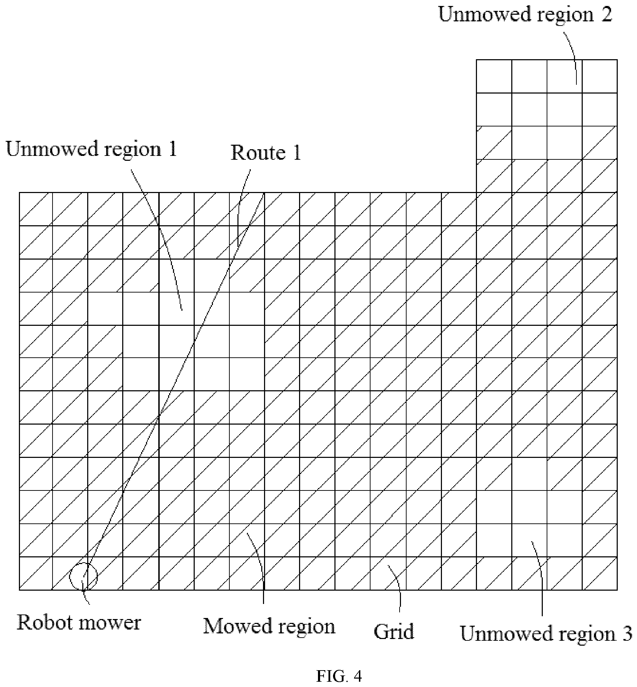

The positioning precision of the positioning module of the moving robot mower in this embodiment may be relatively low, and does not need to move along a specified path accurately and almost without deviation like a high-precision robot. Flowcharts of the control method in this embodiment are shown in FIGs. 1-3, and movement processes of the driven robot mower are shown in FIGs. 4-8, where an unmowed region having largest area in each scenario is mow in each figure.

The following, combined with FIGs. 1 to 8, illustrates a control method for a robot mower provided in an embodiment of the present invention. Although the present application provides method operation steps as shown in the following implementations or flowcharts, the steps of the method logically do not have a causal relationship based on conventional or non-creative efforts, and the execution order of the steps is not limited to that provided in the implementation of the present application.

Specifically, the control method for a robot mower comprises steps S10 to S60 below:
Step S10: Control the robot mower to work in a lawn.

When the robot mower moves, a movement path of the robot mower is synchronously recorded on a map. The movement path is recorded by finding corresponding positions on the map through real-time positioning data fed back by a positioning module of the robot mower and marking the movement path.

Further, the map comprises a plurality of grids, as shown in FIGs. 4-8. The entire lawn is divided into a plurality of grids, the grids through which the movement path of the robot mower has passed are marked as covered grids, and the grids through which the movement path of the robot mower has not passed are marked as uncovered grids. Here, the grids through which the movement path of the robot mower has passed may be marked as passed after the robot mower passes once, or determined as passed when the coverage area of the robot mower reaches a preset value or above and the robot mower passes n times, and the specific value may be set according to the needs of actual scenarios.

In FIGs. 4 to 8, the covered grids correspond to regions marked with section lines, indicating that the grids are within mowed regions; and the uncovered grids correspond to regions not marked with section lines, indicating that the grids are within unmowed regions. There is a plurality of unmowed regions inside the lawn except the regions that have been mowed by the robot mower. The regions which are not covered by the movement path of the robot mower in the lawn of the map in some scenarios, or the regions which are covered but of which coverage area does not reach a preset value or above or through which the robot does not pass n times, are all regarded as unmowed regions.

Step S20: Determine whether a boundary of the lawn or an obstacle is detected.

The boundary of the lawn may be a boundary of the lawn with other road surface, such as a road, or a boundary defined by a user, such as through a marker or a magnetic guide, or a boundary drawn on the map. The obstacle may be a marker, a magnetic guide, or other objects that obstruct the movement of the robot mower.

Step S30: Control the robot mower to turn when the boundary of the lawn or the obstacle is detected.

On the basis of mowing missed regions in this embodiment, step S30 may proceed to obtain a target position, which is determined according to an unmowed region having largest area.

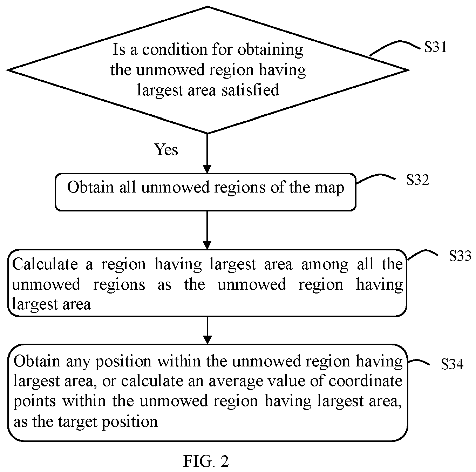

Step S30 may be seen in FIG. 2, and specifically comprises the following steps S31 to S34:
Step S31: Determine whether a condition for obtaining an unmowed region having largest area is satisfied when the robot mower is controlled to turn. Here, there are multiple possibilities for the condition, and here are three examples:
(1) Determine that the movement state of the robot mower satisfies the condition if the mowing time of the robot mower reaches a first check threshold.
   In this implementation, with reference to running time, when the mowing time of the robot mower reaches the first check threshold, it means that the running time of the robot mower is long enough, many regions may have been mowed, and missed regions can be mowed.
(2) Obtain visual data collected by the robot mower;
   Identify the visual data and determine height data of grass in the lawn in the visual data;
   Compare the height data with a height threshold, and determine that the movement state of the robot mower satisfies the condition if the duration of the height data less than the height threshold reaches a second check threshold.
   In this implementation, the robot mower needs to be equipped with a visual module for obtaining the visual data and determining the height of grass through vision. In addition, the visual range of the visual module may be very small, such as within a radius of 5 meters, so as to meet usage requirements at a lower cost. When the duration of the height data less than the height threshold reaches the second check threshold, it means that the robot mower has been running in low grass regions for a long enough time, many regions have been mowed, and missed regions can be mowed.
(3) Obtain working current of the robot mower;
   Compare the working current with a current threshold, and determine that the movement state of the robot mower satisfies the condition if the duration of the working current less than the current threshold reaches a third check threshold.

In this implementation, when the robot mower works in high grass regions, the running resistance is large and the working current is high. When the robot works in low grass regions where grass has been mowed, the running resistance is small and the working current is low. Therefore, when the duration of the working current less than the current threshold reaches the third check threshold, it means that the robot mower has been running in low grass regions for a long enough time, many regions have been mowed, and missed regions can be mowed.

One or more of the conditions corresponding to the three situations can be selected for determination. When the condition(s) is/are satisfied, the following steps are continued. In FIG. 2, if the condition for obtaining an unmowed region having largest area is not satisfied, previous step S10 can be continued.

Step S32: Obtain all unmowed regions of the map.

All unmowed regions may be one or multiple. For example, in FIG. 4, there are 3 unmowed regions. Specific determination for the unmowed regions is described above.

Step S33: Calculate a region having largest area among all the unmowed regions as the unmowed region having largest area.

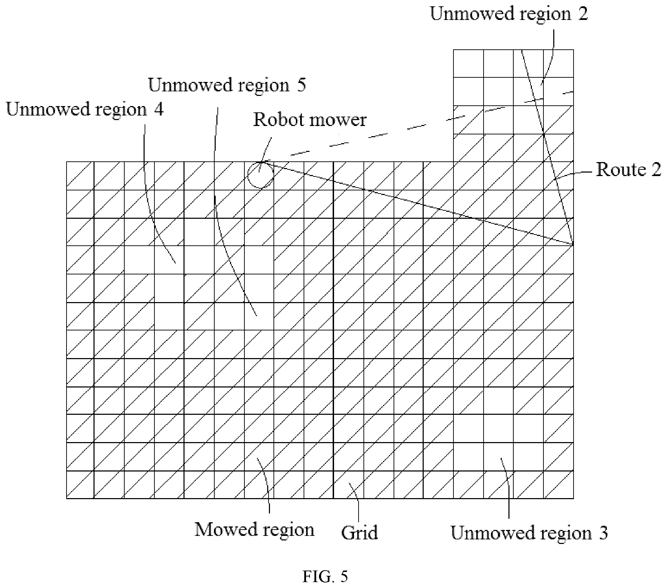

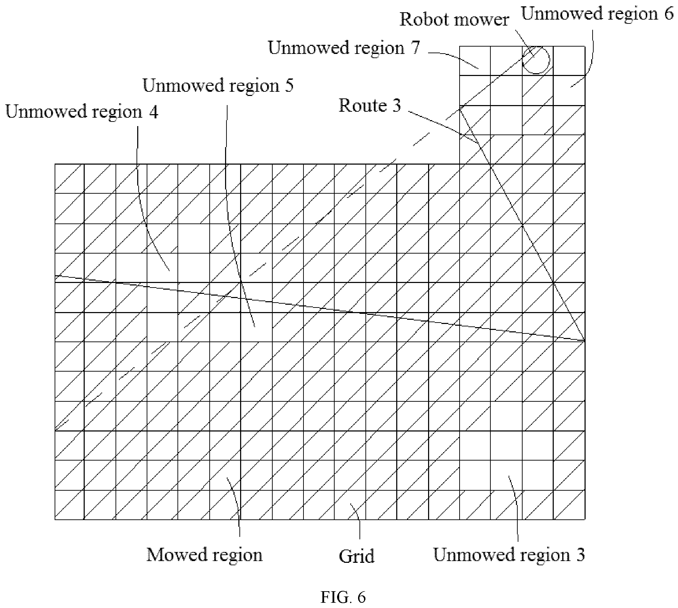

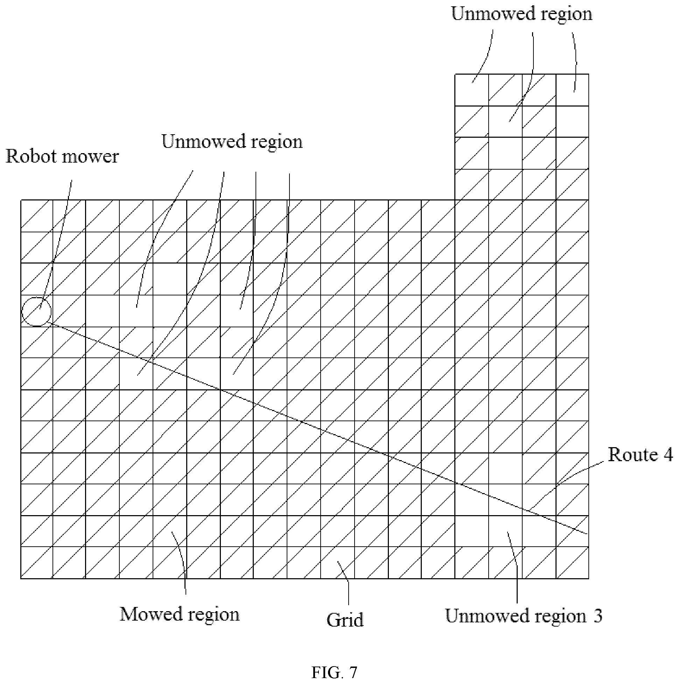

In this step, the region with the largest number of adjacent uncovered grids is taken as the region having largest area among the unmowed regions. For example, in FIG. 4, unmowed region 1 has the largest number of connected uncovered grids, so unmowed region 1 is the unmowed region having largest area. In FIG. 5, unmowed region 2 has the largest number of connected uncovered grids, so unmowed region 2 is the unmowed region having largest area. In FIG. 6, unmowed region 4 and unmowed region 3 divided from original unmowed region 1 have the same number of uncovered grids. In this case, one of them can be randomly selected, for example, unmowed region 4 is selected, that is, unmowed region 4 is the unmowed region having largest area. In FIG. 7, unmowed region 3 has the largest number of connected uncovered grids, so unmowed region 3 is the unmowed region having largest area.

Step S34: Obtain any position within the unmowed region having largest area, or calculate an average value of coordinate points within the unmowed region having largest area, as the target position.

Any position within the unmowed region having largest area refers to coordinates of any uncovered grid within the unmowed region, such as coordinates of a center point of the uncovered grid, and the coordinates are determined as the target position.

The average value of coordinate points within the unmowed region may be an average sum of coordinates of center points of all uncovered grids within the unmowed region, and the average value is the target position.

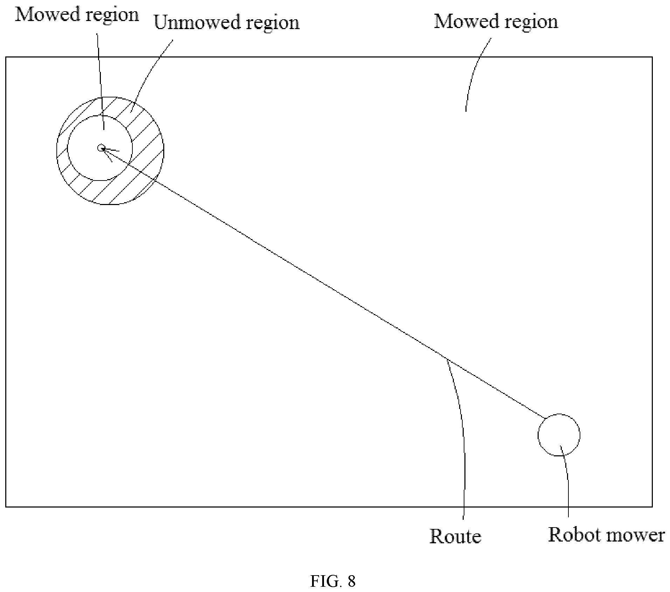

Here, as shown in FIG. 8, in step S30 of determining a target position according to the unmowed region having largest area, the target position may not be within the unmowed region. For example, the unmowed region is circular, and the calculated average value of coordinate points within the unmowed region having largest area falls within the mowed region. Although the robot moves towards the mowed region, this situation still conforms to the mowing requirement in this embodiment and can solve the corresponding problem.

Step S40: Calculate a turning angle of the robot mower according to a current position and current orientation of the robot mower and the target position.

An angle between a direction of a line connecting the current position with the target position and the current orientation is calculated, and the calculated angle is the turning angle.

A target vector between the robot mower and the target position may be determined according to coordinates of the current position and the target position, an orientation vector of the robot mower may be determined according to the current orientation, an angle between the target vector and the orientation vector is calculated, an angle to be turned may be calculated, and the orientation of the robot mower can be adjusted according to the angle, so that the robot mower moves towards the target position.

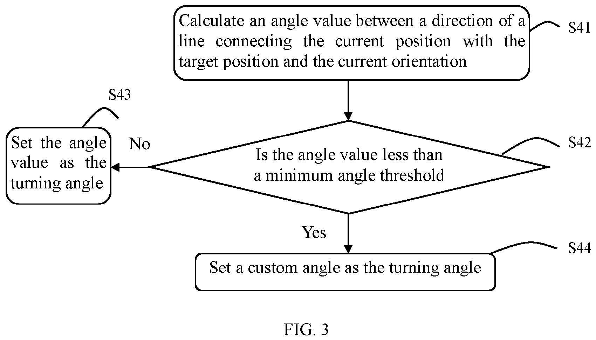

Moreover, in other implementations, step S40 may also refer to FIG. 3, comprising steps S41 to S44:
Step S41: Calculate an angle value between a direction of a line connecting the current position with the target position and the current orientation.
Step S42: Determine magnitudes of the angle value and a minimum angle threshold.
Step S43: Set the angle value as the turning angle if the angle value is not less than the minimum angle threshold.
Step S44: Set a custom angle as the turning angle if the angle value is less than the minimum angle threshold, where the custom angle is greater than the minimum angle threshold. The custom angle is a random angle greater than the minimum angle threshold, or a preset angle.

If the angle value is less than the minimum angle threshold, it means that if the robot moves in that direction, expectations cannot be achieved, and other angles of movement are needed. The specific principle and movement process will be explained below.

Step S50: Control the robot mower to turn according to the turning angle.

Step S60: Control the robot mower to move forward.

The forward movement here refers to directly driving the robot mower to move forward along the current orientation after step S50, where the robot mower has turned into position. Therefore, the forward here refers to the front of the robot mower, and is spatially not unique in specific direction. Different orientations of the robot mower may indicate different fronts.

Step S60 may be understood as continuing to execute step S10, that is, returning to step S10 and continuously running the determination in step S20 and other subsequent steps.

The above steps are explained below using the movement processes shown in FIGs. 4 to 7.

First, the robot mower is controlled to work in a lawn through step S10, the robot mower reaches a boundary position at the bottom left corner in FIG. 4, boundary determination is performed through step S20, the condition for obtaining an unmowed region having largest area is satisfied as determined in step S31, and subsequent steps can be performed to mow missed regions. Then, FIG. 4 is taken as an example to continue the explanation.

In FIG. 4:
Step S32 is performed to obtain all unmowed regions, comprising unmowed region 1, unmowed region 2, and unmowed region 3.
Step S33 is performed to calculate a region having largest area among all the unmowed regions, where unmowed region 1 is the unmowed region having largest area.
Step S34 is performed to obtain any position within the unmowed region having largest area, for example, obtain any position within unmowed region 1 as a target position.
Step S40 is performed to calculate a turning angle of the robot mower, where the turning angle is not less than the minimum angle threshold in step S43.
Step S50 is performed to control the robot mower to turn according to the turning angle.
Step S60 is performed to control the robot mower to move forward on route 1 in FIG. 4.

In FIG. 5:
After the robot mower passes through unmowed region 1, some uncovered grids in unmowed region 1 become covered grids, unmowed region 1 is divided into unmowed region 4 and unmowed region 5, and the robot mower reaches an upper boundary in the figure, that is, the process returns to step S20.

The condition in S31 is still satisfied, and step S32 is performed to obtain all unmowed regions, comprising unmowed region 2, unmowed region 3, unmowed region 4, and unmowed region 5.

Step S33 is performed to calculate a region having largest area among all the unmowed regions, where unmowed region 2 is the unmowed region having largest area.

Step S34 is performed to obtain any position within the unmowed region having largest area, for example, obtain any position within unmowed region 2 as a target position.

Step S40 is performed to calculate a turning angle of the robot mower. Then, it is assumed that the turning angle is not less than the minimum angle threshold in step S43.

Theoretically, the robot mower should follow the path indicated by the dotted line, but the dotted line is located outside the lawn, so the robot cannot follow the path.

The robot mower will come into contact with the boundary of the lawn again, that is, the process returns to step S20 again. Then step S40 is performed, the calculated new turning angle is around 0°, that is, the robot mower does not need to turn or turns a very small angle, and the angle value is less than the minimum angle threshold. Therefore, the turning angle is changed into a custom angle greater than the minimum angle threshold.

Step S50 is performed to control the robot mower to turn according to the turning angle.

Step S60 is performed to control the robot mower to move forward. After the robot touches a new boundary, the process returns to step S20 again, the above steps are continued, the new turning angle is not less than the minimum angle threshold, the robot can move towards unmowed region 2, and finally route 2 in FIG. 5 is obtained.

In FIG. 6:
After the robot mower passes through unmowed region 2, some uncovered grids in unmowed region 2 become covered grids, unmowed region 2 is divided into unmowed region 6 and unmowed region 7, and the robot mower reaches an upper boundary in the figure, that is, the process returns to step S20.

The process refers to the previous steps, and it should be noted that:
(1) When two unmowed regions having same largest area appear on the map, one of them may be selected for moving forward. For example, if unmowed region 4 and unmowed region 3 in the figure have the same largest area, unmowed region 4 may be selected for moving forward.
(2) An ideal movement trajectory is the trajectory of the dashed line in FIG. 6, but the dashed line passes through non-lawn regions. Therefore, the robot turns when the robot reaches the boundary of the lawn or an obstacle is detected. Other processes are described above, and finally route 3 in FIG. 6 is obtained.

In FIG. 7:
After the robot mower passes through unmowed region 4, the map is divided into more, very small unmowed regions. In this case, the largest unmowed region 3 is taken as a direction of movement, and finally route 4 in FIG. 7 is obtained.

Finally, during the execution of steps S10 to S60, if the robot mower operates to satisfy a stop condition, the robot mower may be controlled to stop operating or return for charging. The stop condition comprises reaching a boundary, reaching an obstacle position, reaching a mowed region, operating for a maximum working time, out of power, or the like.

Compared with existing technologies, this embodiment has the following beneficial effects:
Through the control method for a robot mower, the robot mower can be controlled to move towards a direction of an unmowed region having largest area. Although the positioning precision of the robot mower is low, determination on the direction does not require high precision. In addition, an unmowed region may differ from an actual situation. However, ranges of the unmowed region having largest area and the actual unmowed region have more overlap than ranges of an unmowed region having smaller area and the actual unmowed region, that is, in a case where the parameters such as mowed regions, unmowed regions, current position, and current orientation may all be inaccurate, the robot mower with low positioning precision is most likely to mow grass when moving towards the unmowed region having largest area, so that the area of the unmowed region can quickly converge to a smaller state. Therefore, low-precision navigation and positioning can also meet usage requirements, and the requirements of usage scenarios are met at lower costs. With the goal of the unmowed region having largest area, the robot mower moves in a most unmowed possibility, so that a plurality of diverging unmowed regions quickly converge to a mowed state, and the speed of mowing the entire lawn is faster.

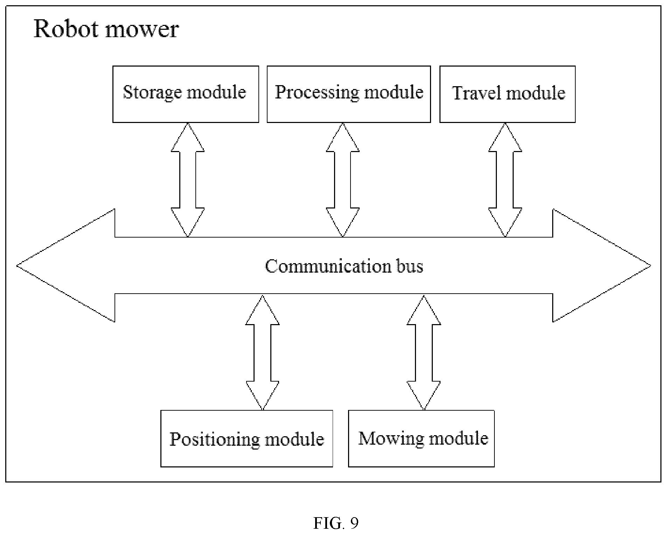

Further, a schematic diagram of modules of a robot mower is shown in FIG. 9. In addition to the aforementioned travel module, mowing module, and positioning module, the robot mower further comprises a storage module and a processing module. When the processing module executes a computer program, the steps in the aforementioned method for a robot mower can be implemented, that is, the steps in any technical solution of the aforementioned control method for a robot mower can be implemented.

The processing module may be a central processing unit (CPU), other general-purpose processor, digital signal processor (DSP), application specific integrated circuit (ASIC), field-programmable gate array (FPGA), other programmable logic device, discrete gate or transistor logic device, discrete hardware component, or the like. The general-purpose processor may be a microprocessor or any conventional processor. The processing module is a control center of the robot mower, which connects various parts of the entire robot mower through various interfaces and circuits.

The storage module may be configured to store the computer program and/or modules, and the processing module implements various functions of the robot mower by running or executing the computer program and/or modules stored in the storage module and calling data stored in the storage module. The storage module may mainly comprise a program storage region and a data storage region, where the program storage region may store an operating system, an application program required for at least one function, and the like. In addition, the storage module may comprise a high-speed random access memory, a non-volatile memory, such as a hard disk, an internal memory, or a plug-in hard disk, a smart media card (SMC), a secure digital (SD) card, a flash card, at least one disk storage device, flash device, or other volatile solid-state storage devices.

For example, the computer program may be divided into one or more modules/units, and the one or more modules/units are stored in the storage module and executed by the processing module to complete the present invention. The one or more modules/units may be a series of computer program instruction segments capable of completing specific functions, and the instruction segments are used for describing the execution process of the computer program in the robot mower.

It should be noted that details not disclosed in the robot mower of the embodiments of the present invention refer to the details disclosed in the control method of the embodiments of the present invention.

It should be understood that the description is provided according to the implementations, but not each implementation comprises only one independent technical solution, the narration of the description is only for clarity, those skilled in the art should regard the description as a whole, and the technical solutions in the implementations may also be properly combined to form other implementations that can be understood by those skilled in the art.

A series of detailed descriptions set forth above are merely specific descriptions directed to the feasible implementations of the present invention, and they are not intended to limit the protection scope of the present invention. Any equivalent implementation or alteration made without departing from the spirit of the present invention shall fall within the protection scope of the present invention.

## Claims

1. A control method for a robot mower, comprising steps of:
controlling the robot mower to work within a lawn, and controlling the robot mower to turn upon detecting a boundary of the lawn or an obstacle;
when controlling the robot mower to turn, obtaining a target position, the target position being determined according to an unmowed region having the largest area, wherein there is a plurality of unmowed regions within the lawn except regions that have been mowed by the robot mower;
calculating a turning angle of the robot mower according to a current position and current orientation of the robot mower and the target position;
controlling the robot mower to turn according to the turning angle; and
controlling the robot mower to move forward.

2. The control method according to claim 1, wherein the step of, when controlling the robot mower to turn, obtaining a target position, the target position being determined according to an unmowed region having largest area, comprises:
when controlling the robot mower to turn, determining whether a condition for obtaining the unmowed region having largest area is satisfied; and
when the condition is satisfied, obtaining the unmowed region having largest area, and obtaining any position within the unmowed region having largest area, or calculating an average value of coordinate points within the unmowed region having largest area, as the target position.

3. The control method according to claim 2, wherein the unmowed region having largest area is obtained by the following steps:
synchronously recording a movement path of the robot mower on a map when the robot mower moves;
obtaining all unmowed regions of the map, wherein the unmowed regions are regions within the lawn of the map that are not covered by the movement path of the robot mower; and
calculating a region having largest area among all the unmowed regions, as the unmowed region having largest area.

4. The control method according to claim 3, wherein the map comprises a plurality of grids, the grids through which the movement path of the robot mower has passed are marked as covered grids, and the grids through which the movement path of the robot mower has not passed are marked as uncovered grids.

5. The control method according to claim 4, wherein the step of calculating a region having largest area among the unmowed regions comprises: taking a region with the largest number of adjacent uncovered grids as the region having largest area among the unmowed regions.

6. The control method according to claim 2, wherein the step of determining whether a condition for obtaining the unmowed region having largest area is satisfied comprises:
determining that a movement state of the robot mower satisfies the condition if a mowing time of the robot mower reaches a first check threshold;
or
obtaining visual data collected by the robot mower;
identifying the visual data and determining height data of grass within the lawn in the visual data; and
comparing the height data with a height threshold, and determining that the movement state of the robot mower satisfies the condition if the duration during which the height data is lower than the height threshold reaches a second check threshold;
or
obtaining working current of the robot mower; and
comparing the working current with a current threshold, and determining that the movement state of the robot mower satisfies the condition if the duration during which the working current is lower than the current threshold reaches a third check threshold.

7. The control method according to claim 1, wherein the step of calculating a turning angle of the robot mower according to a current position and current orientation of the robot mower and the target position includes:
calculating a calculated angle between a direction of a line connecting the current position with the target position and the current orientation, wherein the calculated angle is the turning angle.

8. The control method according to claim 1, wherein the step of calculating a turning angle of the robot mower according to a current position and current orientation of the robot mower and the target position includes:
calculating an angle value between a direction of a line connecting the current position with the target position and the current orientation; comparing the angle value with a minimum angle threshold; and
setting a custom angle as the turning angle if the angle value is less than the minimum angle threshold, wherein the custom angle is greater than the minimum angle threshold; or
setting the angle value as the turning angle if the angle value is not less than the minimum angle threshold.

9. The control method according to claim 8, wherein the custom angle is a random angle greater than the minimum angle threshold, or a preset angle.

10. A robot mower, comprising:
a storage module for storing a computer program; and
a processing module capable of implementing the steps of the control method according to any one of claims 1 to 9 when executing the computer program.
